# EUROPEAN PATENT APPLICATION

(11) **EP 3 989 331 A1**
(43) Date of publication of application: **27.04.2022**
(21) Application number: 20825876.4
(22) Date of filing: 12.06.2020
(51) Int. Cl.: H01M 10/613, H01M 10/625, H01M 10/6554, H01M 10/6568, H05K 7/20

(54) **COOLING DEVICE AND STRUCTURE**

(30) Priority: 21.06.2019 JP 2019115281
(71) Applicant: Mitsui Chemicals, Inc., Tokyo 105-7122 (JP)
(72) Inventor: KIMURA, Kazuki, Sodegaura-shi, Chiba 299-0265 (JP); TOMINAGA, Takahiro, Sodegaura-shi, Chiba 299-0265 (JP); KURIYAGAWA, Mizue, Sodegaura-shi, Chiba 299-0265 (JP); TORII, Tomoki, Tokyo 105-7122 (JP); NOMOTO, Kyohei, Tokyo 105-7122 (JP)
(74) Representative: J A Kemp LLP
(86) International application number: PCT/JP2020/023255
(87) International publication number: WO 2020/255885

(57) **Abstract**

A cooling device including: a resin flow path (10) which is provided with a space portion (10A) serving as a flow path in at least one surface; a metal cooling panel (20) for cooling a heating element, which covers the space portion (10A) and of which at least a part is in contact with the resin flow path (10) ; and a resin bonding member (30) for bonding the resin flow path (10) and the metal cooling panel (20), in which the metal cooling panel (20) has a fine uneven structure at least on a surface of a bonding portion with the resin bonding member (30), and the metal cooling panel (20) and the resin bonding member (30) are bonded by allowing a part of the resin bonding member (30) to enter into the fine uneven structure.

## Description

### TECHNICAL FIELD

The present invention relates to a cooling device and a structure.

### BACKGROUND ART

In recent years, batteries have been attracting attention as a power source for electric vehicles and the like. It has been known that high-output and high-capacity batteries generate a large quantity of heat during the course of charging or discharging, and the heat causes deterioration of the battery. Therefore, the batteries require a cooling system.

In addition, a countermeasure against heat has been thought to be important for electronic components mounted with a semiconductor element, which is a heat generating element. In particular, the power consumption per electronic component has remarkably increased due to the recent tendency toward the miniaturization and high-density packaging of electronic components, or the speeding up of microprocessors, and an efficient cooling system is important.

In recent years, liquid-cooling type cooling devices have been employed as a cooling system for a heating element such as a battery or an electronic component. A liquid-cooling type cooling device is a device in which a metal plate having a built-in flow path for circulating a refrigerant, a so-called cold plate, is brought into contact with a heating element, and by the refrigerant passing through the flow path, heat generated from the heating element is transferred to a heat sink on the heat dissipation side provided outside the device to cool the heating element (for example, see Patent Document 1).

Patent Document 1 discloses a cooling mechanism including a first plate having a mounting surface which is in thermal contact with a corresponding set battery, a second plate which is fixed to a surface opposite to the mounting surface, a cooling flow path which is formed between the first plate and the second plate, and a sealing portion which is disposed between the first plate and the second plate to seal the cooling flow path.

### RELATED DOCUMENT

### PATENT DOCUMENT

[Patent Document 1] International Publication No. WO2017/002325

### SUMMARY OF THE INVENTION

### TECHNICAL PROBLEM

However, the cooling mechanism disclosed in Patent Document 1 has a problem in that the weight is increased since both the first plate and the second plate are made of a metal. Furthermore, in a case where the cooling mechanism is applied to cooling of a large and heavyweight battery block, there is concern that the sealing portion between the metal plates may be partially broken by an impact or vibration, and in a case where a cooling medium leaks and is brought into contact with the set battery, a short circuit of the battery may occur.

The present invention is contrived in view of the above circumstances, and provides a cooling device capable of reducing the risk of leakage of a cooling medium and having an excellent lightweight property, and a structure.

### SOLUTION TO PROBLEM

According to the present invention, a cooling device and a structure are provided as follows.
[1] A cooling device including: a resin flow path which is provided with a space portion serving as a flow path in at least one surface;
   a metal cooling panel for cooling a heating element, which covers the space portion and of which at least a part is in contact with the resin flow path; and
   a resin bonding member for bonding the resin flow path and the metal cooling panel,
   in which the metal cooling panel has a fine uneven structure at least on a surface of a bonding portion with the resin bonding member, and
   the metal cooling panel and the resin bonding member are bonded by allowing a part of the resin bonding member to enter into the fine uneven structure.
[2] The cooling device according to [1],
   in which a resin component constituting the resin flow path and a resin component constituting the resin bonding member are integrated at a bonding portion between the resin flow path and the resin bonding member.
[3] The cooling device according to [1] or [2],
   in which a resin component constituting the resin flow path and a resin component constituting the resin bonding member are fused at a bonding portion between the resin flow path and the resin bonding member.
[4] The cooling device according to any one of [1] to [3],
   in which both a resin component constituting the resin flow path and a resin component constituting the resin bonding member are thermoplastic resins or thermosetting resins.
[5] The cooling device according to any one of [1] to [4],
   in which the resin flow path and the metal cooling panel are in contact with each other at an outer periphery of the resin flow path.
[6] The cooling device according to [5],
   in which the resin flow path and the metal cooling panel are in contact with each other even inside the resin flow path.
[7] The cooling device according to any one of [1] to [6],
   in which the resin flow path has a bottom portion, a side wall portion erected on the bottom portion, and a plurality of threshold-like barriers for forming a cooling medium flow path on the bottom portion.
[8] The cooling device according to any one of [1] to [7],
   in which the metal cooling panel and the resin flow path are bonded by one or more selected from an adhesive method, a heat fusion method, and a mechanical fastening method.
[9] The cooling device according to any one of [1] to [8],
   in which an interval period of the fine uneven structure is in a range of 0.01 µm to 500 µm.
[10] The cooling device according to any one of [1] to [9],
   in which the metal cooling panel is formed of at least one selected from the group consisting of an aluminum member, an aluminum alloy member, a copper member, and a copper alloy member.
[11] A structure including: a heating element; and
   the cooling device according to any one of [1] to [10],
   in which the heating element is disposed on a surface of the metal cooling panel in the cooling device.

### ADVANTAGEOUS EFFECTS OF INVENTION

According to the present invention, it is possible to provide a cooling device capable of reducing the risk of leakage of a cooling medium and having an excellent lightweight property, and a structure.

### BRIEF DESCRIPTION OF THE DRAWINGS

Fig. 1 is a plan view schematically showing an example of a structure of a cooling device according to this embodiment.
Fig. 2 shows (a) a cross-sectional view taken along the line A-A' of the cooling device shown in Fig. 1, (b) a side view of the cooling device, and (c) a cross-sectional view taken along the line C-C' of the cooling device.
Fig. 3 is a horizontal sectional view taken along the line B-B' of the cooling device shown in Fig. 2(b).
Fig. 4 shows cross-sectional views each showing an example of the positional relationship among a resin flow path, a metal cooling panel, and a resin bonding member according to this embodiment.
Fig. 5 shows cross-sectional views each showing an example of the positional relationship among the resin flow path, the metal cooling panel, and the resin bonding member according to this embodiment.

### DESCRIPTION OF EMBODIMENTS

Hereinafter, embodiments of the present invention will be described using the drawings. In all the drawings, the same constituent elements are denoted by the same reference signs, and description thereof will not be repeated. In addition, the drawings are schematic drawings, and dimension ratios in the drawings are different from the actual dimension ratios. Unless otherwise specified, the symbol "-" between numbers in the sentence represents equal to or more than the number and equal to or less than the other number.

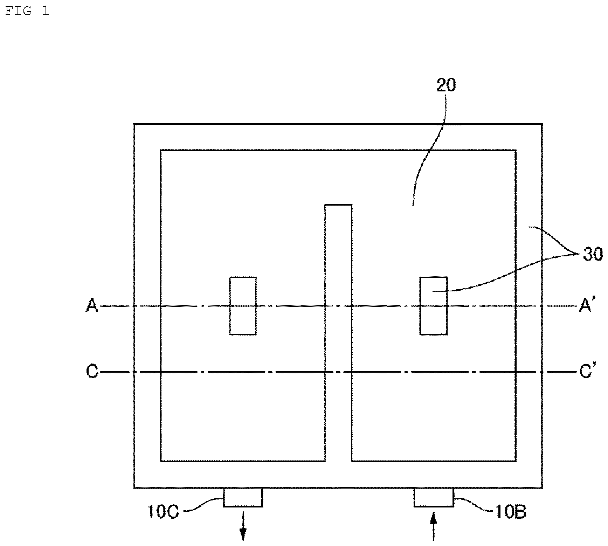

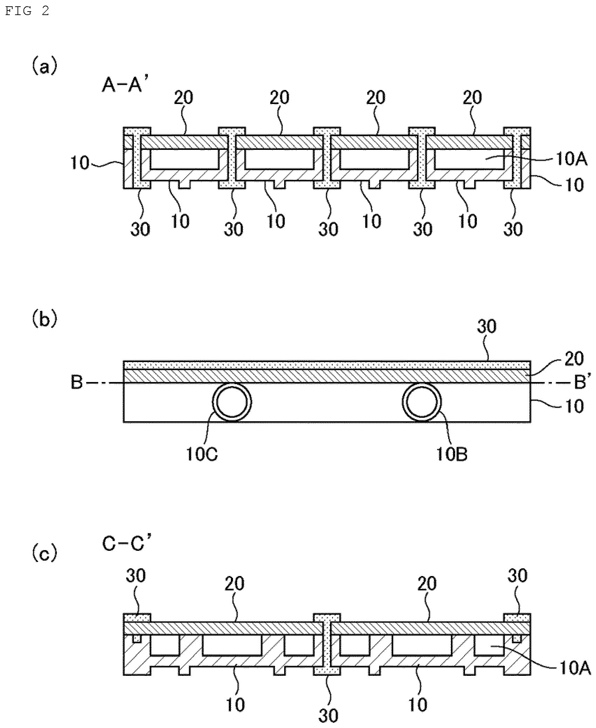

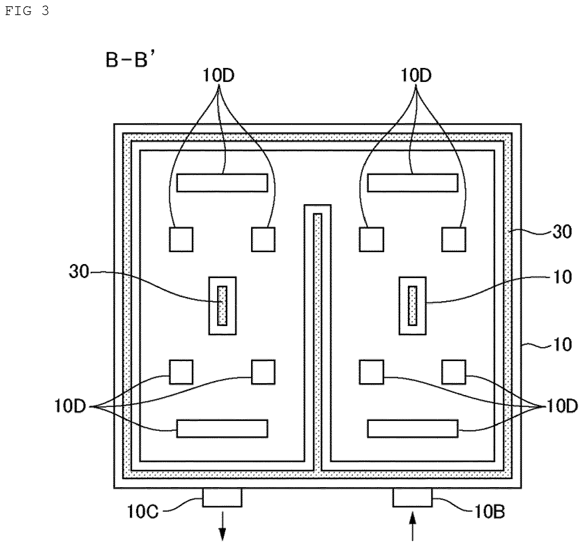

Fig. 1 is a plan view schematically showing an example of a structure of a cooling device according to this embodiment. Fig. 2 shows (a) a cross-sectional view taken along the line A-A' of the cooling device shown in Fig. 1, (b) a side view of the cooling device, and (c) a cross-sectional view taken along the line C-C' of the cooling device. Fig. 3 is a horizontal sectional view taken along the line B-B' of the cooling device shown in Fig. 2(b).

The cooling device according to this embodiment includes a resin flow path 10 which is provided with a space portion 10A serving as a flow path in at least one surface, a metal cooling panel 20 for cooling a heating element, which covers the space portion 10A and of which at least a part is in contact with the resin flow path 10, and a resin bonding member 30 for bonding the resin flow path 10 and the metal cooling panel 20, the metal cooling panel 20 has a fine uneven structure at least on a surface of a bonding portion with the resin bonding member 30, and the metal cooling panel 20 and the resin bonding member 30 are bonded by allowing a part of the resin bonding member 30 to enter into the fine uneven structure.

Since the entire metal cooling panel 20 is cooled by a cooling medium (hereinafter, also referred to as a refrigerant) conducted to the space portion 10A serving as a flow path formed in the resin flow path 10, it is possible to increase the cooling efficiency of a heating element such as a battery cell or an electronic component which is in contact with the metal cooling panel 20. In addition, since the resin flow path 10 is integrally formed of a lightweight resin material, the weight of the entire cooling device can be reduced.

In addition, the bondability between the metal cooling panel 20 and the resin bonding member 30 can be increased by allowing a part of the resin bonding member 30 to enter into the fine uneven structure of the metal cooling panel 20. Accordingly, the resin flow path 10 and the metal cooling panel 20 can be firmly bonded by using the resin bonding member 30, and thus the airtightness between the resin flow path 10 and the metal cooling panel 20 can be increased. Accordingly, the risk of leakage of the refrigerant from the cooling device can be suppressed.

From the above, according to this embodiment, it is possible to provide a cooling device capable of reducing the risk of leakage of a cooling medium and having an excellent lightweight property.

Here, from the viewpoint of further reducing the risk of leakage of the refrigerant from the cooling device, it is preferable that the resin component constituting the resin flow path 10 and the resin component constituting the resin bonding member 30 are integrated at least at the bonding portion between the resin flow path 10 and the resin bonding member 30, and it is more preferable that the resin component constituting the resin flow path 10 and the resin component constituting the resin bonding member 30 are fused at least at the bonding portion between the resin flow path 10 and the resin bonding member 30. Accordingly, the bondability between the resin flow path 10 and the resin bonding member 30 is improved, and the leakage of the refrigerant from the bonding portion between the resin flow path 10 and the resin bonding member 30 can be further suppressed. In a case where the resin flow path 10 and the resin bonding member 30 have appearances of the same color, it may be difficult to visually determine that the resin flow path and the resin bonding member are integrated. As a method of observing the integration between the resin components, for example, by cutting a portion where the resin components are integrated and observing a cross-section of the cut portion with an optical microscope or a polarizing microscope, a boundary portion where the orientation state of the resin crystal orientation layer or the reinforcing filler orientation layer during the molding of the resin changes can be determined as the portion where the resin components are integrated.

In the cooling device according to this embodiment, it is preferable that both the resin component constituting the resin flow path 10 and the resin component constituting the resin bonding member 30 are thermoplastic resins or thermosetting resins, and it is more preferable that the resin component constituting the resin flow path 10 and the resin component constituting the resin bonding member 30 include resins of the same series. Accordingly, the compatibility between the resin component constituting the resin flow path 10 and the resin component constituting the resin bonding member 30 can be improved, and as a result, the bondability between the resin flow path 10 and the resin bonding member 30 can be improved.

In addition, even in a case where the resin component constituting the resin flow path 10 and the resin component constituting the resin bonding member 30 are resins of different series, high compatibility can be obtained by selecting different resins having a strong chemical interaction with each other.

As shown in Figs. 1 and 2, in the cooling device according to this embodiment, the resin flow path 10 and the metal cooling panel 20 are usually in contact with each other at an outer periphery of the resin flow path 10. However, from the viewpoint of further firmly bonding the resin flow path 10 and the metal cooling panel 20 and further increasing the airtightness between the resin flow path 10 and the metal cooling panel 20, the resin flow path 10 and the metal cooling panel 20 are preferably provided to be in close contact with each other at one or more portions even inside the resin flow path 10 (a portion other than the outer periphery, for example, a central portion).

In the cooling device according to this embodiment, usually, the resin flow path 10 and the metal cooling panel 20 are not directly bonded, and the resin bonding member 30 is bonded to each of the resin flow path 10 and the metal cooling panel 20. Therefore, the resin flow path 10 and the metal cooling panel 20 are indirectly bonded, that is, in close contact with each other to maintain airtightness so that the refrigerant does not leak. The metal cooling panel 20 is laminated after molding of the resin flow path 10 having the space portion 10A. Accordingly, usually, the resin flow path 10 and the metal cooling panel 20 are not directly bonded. Here, in this embodiment, the state in which the resin flow path 10 and the metal cooling panel 20 are directly bonded means that a part of the resin flow path 10 enters into the fine uneven structure of the surface of the metal cooling panel 20, and the metal cooling panel 20 and the resin flow path 10 are thus bonded. The state does not include a state in which the resin flow path 10 and the metal cooling panel 20 are bonded by a bonding method selected from an adhesive method, a heat fusion method, and a mechanical fastening method.

In the cooling device according to this embodiment, the resin flow path 10 may include a plurality of flow path units. Accordingly, the flow of the refrigerant can be more complicatedly controlled, and for example, a plurality of heating elements can be liquid-cooled at the same time.

Here, the plurality of flow path units may be configured to be integrated or divided. In a case where the plurality of flow path units are divided, the flow path units can be connected to each other by using, for example, a refrigerant pipe through which the refrigerant flows.

The number of flow path units constituting the resin flow path 10 is not particularly limited, and can be optionally set according to the size or the number of heating elements to be cooled.

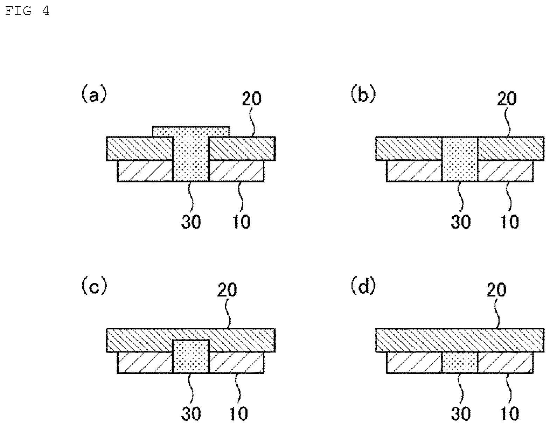

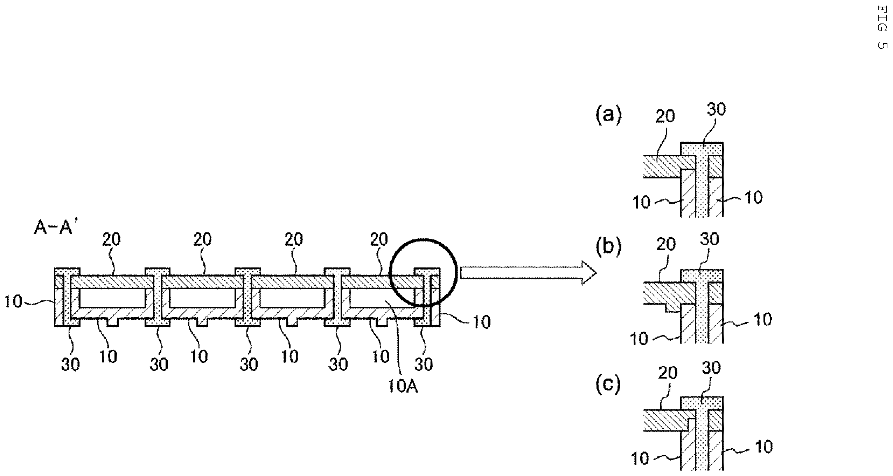

Figs. 4 and 5 show cross-sectional views each showing an example of the positional relationship among the resin flow path 10, the metal cooling panel 20, and the resin bonding member 30 according to this embodiment.

In addition, examples of the positional relationship among the resin flow path 10, the metal cooling panel 20, and the resin bonding member 30 according to this embodiment include the structures (a) to (d) shown in Fig. 4.

In addition, examples of the positional relationship between the resin flow path 10, the metal cooling panel 20, and the resin bonding member 30 according to this embodiment include the structures (a) to (c) shown in Fig. 5.

Fig. 5(a) shows a configuration in which a recessed portion is provided in the metal cooling panel 20 and a part of the resin flow path 10 is inserted into the recessed portion. Figs. 5(b) and 5(c) show a configuration in which a wall of a projecting portion is provided in the metal cooling panel 20 and a part of the resin flow path 10 engages with the step of the projecting portion. With the structures (a) to (c) shown in Fig. 5, it is possible to prevent the resin from leaking to the flow path due to the collapse of a side wall portion or a plurality of threshold-like barriers of the resin flow path 10 by a flow pressure of the resin during the formation of the resin bonding member 30.

A structure according to this embodiment includes a heating element, a cooling device according to this embodiment, and an optional case which accommodates the heating element, and the heating element is disposed on a surface of the metal cooling panel 20 in the cooling device. The heating element is, for example, a battery or an electronic component. The metal cooling panel 20 and the heating element may be brought into direct contact with each other, and a heat conductive sheet is preferably interposed in the contact portion. Instead of the heat conductive sheet, a so-called thermal interface material (TIM) may be used, and specific examples thereof include a thermal grease, a phase-change material (PCM), a gel, a high heat conductive adhesive, and a thermal tape.

A heating element such as a battery or an electronic component is mounted on the surface of the metal cooling panel 20 opposite to the refrigerant flowing surface, and the heating element is optionally accommodated in the case. The side wall portion of the resin flow path 10 is provided with a refrigerant injection port 10B and a refrigerant recovery port 10C, which are liquid passing ports for inflow and outflow of the refrigerant.

Since the entire metal cooling panel 20 is cooled by the refrigerant flowing through the flow path formed inside the resin flow path 10, it is possible to increase the cooling efficiency of the heating element which is in contact with the surface of the metal cooling panel 20 opposite to the contacting surface with the resin flow path 10. In addition, since the resin flow path 10 in which the refrigerant flow path is formed is formed of a lightweight material having an excellent heat insulation property, this can contribute to a reduction in weight of the entire structure, and improve the cooling efficiency.

In the cooling device according to this embodiment, it is preferable that the resin flow path 10 and the metal cooling panel 20 are tightly and firmly bonded in order to ensure strict watertightness so that the refrigerant does not leak even in a case where the cooling device is used under a severe environment. For this, the resin bonding member 30 and another bonding method may be combined. Preferable bonding methods other than the resin bonding member 30 include one or two or more selected from an adhesive method, a heat fusion method, and a mechanical fastening method.

For example, a method of bonding the resin flow path 10 and the metal cooling panel 20 via an adhesive is bonding using an adhesive method. A method of forming a resin bank portion on the surface of the metal cooling panel 20 by a method such as insert molding, and then bonding the resin flow path onto the resin bank portion by a fusion method is a method using a resin-metal heat fusion method and a resin-resin heat fusion method in combination. A method of bonding the resin flow path 10 and the metal cooling panel 20 via an adhesive, and then mechanically fastening the resin flow path and the metal cooling panel is a bonding method in which a heat fusion method and a mechanical fastening method are combined.

As the adhesive used in the above bonding method, a known natural or synthetic adhesive can be used without limitation, and a synthetic adhesive is preferable from the viewpoint of persistence of the adhesive force.

Synthetic adhesives can be classified into thermoplastic adhesives, heat curable adhesives, and elastomers, and heat curable adhesives are preferable from the viewpoint of adhesion strength. The heat curable adhesive may be a room temperature-reactive adhesive (one component type), a thermosetting adhesive (two component type), or a light curable adhesive.

The type of the adhesive is optionally determined by those skilled in the art depending on the circumstances such as what kind of characteristics is to be imparted to the cooling device and what kind of material is to be used for forming the cooling device.

In the cooling device according to this embodiment, examples of the mechanical fastening between the resin flow path 10 and the metal cooling panel 20 include mechanical fastening by rivets, screws, or the like. In this case, at least an outer peripheral end portion of the metal cooling panel 20 and the resin flow path 10 are preferably riveted or screwed. Riveting or screwing can also be performed not only at the outer peripheral end portion of the metal cooling panel 20 but also around a central portion of the metal cooling panel 20 to the extent that the flow of the flow path is not obstructed. In a case where the outer peripheral end portion of the metal cooling panel 20 is mechanically bonded and the metal cooling panel 20 has, for example, a rectangular shape when seen in a plan view, at least four corners of the outer peripheral portion are preferably mechanically bonded. The metal cooling panel 20 and the resin flow path 10 may be mechanically bonded after a resin base for mechanical bonding is formed not only at the outer peripheral end portion of the metal cooling panel 20 but also around the central portion of the metal cooling panel 20. In this case, by positioning the resin base portion in the flow path so that the flow path causes turbulence, it may be possible to contribute to equalization of the temperature of the refrigerant passing through the flow path.

In addition, in the cooling device according to this embodiment, the resin flow path 10 and the metal cooling panel 20 are preferably mechanically bonded by rivets, screws, or the like in addition to being bonded (adhesive method) via an adhesive layer as described above. As described above, in a case where the resin flow path 10 and the metal cooling panel 20 are firmly bonded in two stages, it is possible to more effectively suppress the leakage of the refrigerant flowing in the resin flow path 10.

In this embodiment, the average thickness of the adhesive layer for a case where the bonding is performed using the adhesive method is, for example, 0.5 to 5,000 µm, preferably 1.0 to 2,000 µm, and more preferably 10 to 1,000 µm. In a case where the average thickness is equal to or more than the lower limit, the adhesion strength between the resin flow path 10 and the metal cooling panel 20 can be improved, and in a case where the average thickness is equal to or less than the upper limit, the residual strain amount generated during the curing reaction can be suppressed.

In the cooling device according to this embodiment, a primer layer may be provided between the resin flow path 10 and the adhesive layer and between the adhesive layer and the metal cooling panel 20. The primer layer is not particularly limited, and is usually made of a resin material containing a resin component constituting the resin layer. The resin material for a primer layer is not particularly limited, and a known material can be used. Specific examples thereof include polyolefin-based primers, epoxy-based primers, and urethane-based primers. The primers may be used in combination of two or more types thereof, including a multilayer mode.

The cooling device according to this embodiment can be produced by, for example, superposing the surface of the resin flow path 10 where the flow path is formed and the peripheral edge portion of the metal cooling panel 20, and then performing injection molding of the resin bonding member 30. In addition, the cooling device according to this embodiment can be molded by, for example, die slide injection molding, two-color molding, or the like. In this case, by using a die for die slide injection molding, a die for two-color molding, or the like, it is possible to manufacture the cooling device according to this embodiment without removing the constituent components such as the resin flow path 10 and the metal cooling panel 20 from the die for molding.

The resin flow path 10 and the resin bonding member 30 according to this embodiment each are preferably a molded body of a thermoplastic resin composition. The thermoplastic resin composition contains a thermoplastic resin as a resin component, and may further optionally contain a filler.

The thermoplastic resin is not particularly limited, and examples thereof include polyolefin-based resins, polar group-containing polyolefin-based resins, polymethacrylic resins such as a polymethylmethacrylate resin, polyacrylic resins such as a polymethylacrylate resin, polystyrene resins, polyvinyl alcohol-polyvinyl chloride copolymer resins, polyvinyl acetal resins, polyvinyl butyral resins, polyvinyl formal resins, polymethyl pentene resins, maleic anhydride-styrene copolymer resins, polycarbonate resins, polyphenylene ether resins, aromatic polyether ketones such as polyether ether ketone resins and polyether ketone resins, polyester-based resins, polyamide-based resins, polyamide imide resins, polyimide resins, polyether imide resins, styrene-based elastomers, polyolefin-based elastomers, polyurethane-based elastomers, polyester-based elastomers, polyamide-based elastomers, ionomers, amino polyacrylamide resins, isobutylene-maleic anhydride copolymers, ABS, ACS, AES, AS, ASA, MBS, ethylene-vinyl chloride copolymers, ethylene-vinyl acetate copolymers, ethylene-vinyl acetate-vinyl chloride graft polymers, ethylene-vinyl alcohol copolymers, chlorinated polyvinyl chloride resins, chlorinated polyethylene resins, chlorinated polypropylene resins, carboxyl vinyl polymers, ketone resins, amorphous copolyester resins, norbornene resins, fluoroplastics, polytetrafluoroethylene resins, fluorinated ethylene polypropylene resins, PFA, polychlorofluoroethylene resins, ethylene-tetrafluoroethylene copolymers, polyvinylidene fluoride resins, polyvinyl fluoride resins, polyarylate resins, thermoplastic polyimide resins, polyvinylidene chloride resins, polyvinyl chloride resins, polyvinyl acetate resins, polysulfone resins, poly-para-methylstyrene resins, polyallylamine resins, polyvinyl ether resins, polyphenylene oxide resins, polyphenylene sulfide (PPS) resins, polymethylpentene resins, oligoester acrylates, xylene resins, maleic acid resins, polyhydroxybutyrate resins, polysulfone resins, polylactic acid resins, polyglutamic acid resins, polycaprolactone resins, polyether sulfone resins, polyacrylonitrile resins, and styrene-acrylonitrile copolymer resins. The thermoplastic resins may be used alone or in combination of two or more types thereof.

Among these, as the thermoplastic resin, one or two or more thermoplastic resins selected from polyolefin-based resins, polyester-based resins, polyamide-based resins, fluororesins, polyarylene ether-based resins, and polyarylene sulfide-based resins are preferably used from the viewpoint that the bonding strength between the resin flow path 10 and the resin bonding member 30 or the adhesion strength between the metal cooling panel 20 and the resin bonding member 30 can be more effectively obtained, or that the resistance to chemicals contained in the refrigerant can be effectively exhibited.

Here, as described above, it is more preferable that the resin component constituting the resin flow path 10 and the resin component constituting the resin bonding member 30 include resins of the same series. In this embodiment, the resins of the same series mean resins which may have different molecular weights or different monomer components in the same classification. For example, resins included in the classification of polyolefin-based resins are all resins of the same series even in a case where these have different molecular weights or monomer components.

In the thermoplastic resin composition according to this embodiment, an optional component and a filler can be used in combination from the viewpoint of improving mechanical characteristics of the resin flow path 10 and the resin bonding member 30 and adjusting a difference in coefficient of linear expansion. As the filler, for example, one or two or more can be selected from the group consisting of glass fiber, carbon fiber, carbon particles, clay, talc, silica, mineral, and cellulose fiber. Among these, one or two or more selected from glass fiber, carbon fiber, talc, and mineral are preferable. A heat dissipating filler typified by alumina, forsterite, mica, alumina nitride, boron nitride, zinc oxide, magnesium oxide, or the like can also be used. The shape of the fillers is not particularly limited, and may be any one of a fibrous shape, a particle shape, a plate shape, and the like. However, as will be described later, in a case where the surface of the metal cooling panel 20 has a fine uneven structure, a filler having a size large enough to enter the recessed portion is preferably used.

In a case where the thermoplastic resin composition contains a filler, the content of the filler is preferably 1 part by mass to 100 parts by mass, more preferably 5 parts by mass to 90 parts by mass, and particularly preferably 10 parts by mass to 80 parts by mass with respect to 100 parts by mass of the thermoplastic resin.

A thermosetting resin composition can also be used as the resin flow path 10 according to this embodiment. The thermosetting resin composition is a resin composition containing a thermosetting resin. Examples of the thermosetting resin include a phenolic resin, an epoxy resin, an unsaturated polyester resin, a diallyl phthalate resin, a melamine resin, an oxetane resin, a maleimide resin, a urea (urea) resin, a polyurethane resin, a silicone resin, a resin having a benzoxazine ring, and a cyanate ester resin. These may be used alone or in combination of two or more types thereof.

Among these, a thermosetting resin composition containing one or more selected from the group consisting of a phenolic resin, an epoxy resin, and an unsaturated polyester resin is preferably used from the viewpoint of heat resistance, workability, mechanical characteristics, adhesion, rust resistance, and the like. The content of the thermosetting resin in the thermosetting resin composition is preferably 15 parts by mass to 60 parts by mass, and more preferably 25 parts by mass to 50 parts by mass, assuming that a total amount of the resin composition is 100 parts by mass. The residual component is, for example, a filler, and as the filler, for example, the above-described filler can be used.

A known method can be used without limitation as a method of molding the resin flow path 10, and examples thereof include injection molding, extrusion molding, hot press molding, compression molding, transfer molding, cast molding, laser welding molding, reaction injection molding (RIM molding), liquid injection molding (LIM molding), and spray molding. Among these, an injection molding method is preferable as the method of molding the resin flow path 10 from the viewpoint of productivity and quality stability.

The resin flow path 10 according to this embodiment has, for example, a bottom portion and a side wall portion erected on the bottom portion. The shape of the resin flow path 10 is preferably composed of a bottom portion having a rectangular shape when seen in a plan view and four side wall portions erected on the bottom portion and having a rectangular frame shape when seen in a plan view, and a plurality of threshold-like barriers 10D are formed to form a refrigerant flow path on the bottom portion. A top surface of the barrier 10D is preferably in contact with the surface of the metal cooling panel 20 opposite to the surface on which the heating element is mounted. The top surface and the metal cooling panel 20 may be bonded by an adhesive.

A plurality of space portions 10A are formed in the entire bottom surface of the resin flow path 10 according to this embodiment on the side of the metal cooling panel 20, and the space portions 10A function as a refrigerant flow path due to the close contact between the resin flow path 10 and the surface of the metal cooling panel 20.

Furthermore, the entire shape of the resin flow path 10 according to this embodiment is preferably a panel shape from the viewpoint that the contact area between the refrigerant and the metal cooling panel is increased, and a flow path shape in which even a large heating element can be efficiently and uniformly cooled while minimizing the pressure loss of the fluid is easily formed.

Bamboo blind-like or reinforcing ribs are preferably formed in the surface of the resin flow path 10 according to this embodiment, which is opposite to the surface on the side of the metal cooling panel 20. Such reinforcing ribs are preferably made of the same material as the resin flow path 10. By providing the reinforcing ribs, the structure of the resin flow path 10 can be protected from external stress. In addition, by setting a rib height of the reinforcing ribs high, a sufficient space can be formed between the resin flow path 10 and the contact plane, and as a result, the heat insulating effect of the resin flow path 10 can be further improved, and it may be possible to extend the duration of the cooling function. Otherwise, by reducing a distance between the reinforcing ribs, the heat insulating effect of the resin flow path 10 can be further improved, and as a result, it may be possible to extend the duration of the cooling function.

The surface of the resin flow path 10 according to this embodiment where the flow path is formed is covered with the metal cooling panel 20. In a case where the resin flow path 10 includes a plurality of flow path units, each flow path unit may be covered with one metal cooling panel 20, or the entire flow path units of a large area may be covered with one metal cooling panel 20.

The metal cooling panel 20 according to this embodiment has, for example, a rectangular shape when seen in a plan view. The metal cooling panel 20 has two roles of diffusing the heat from the heating element and efficiently transferring the heat to the refrigerant flowing in the resin flow path 10. Therefore, the material of the metal cooling panel 20 preferably has excellent heat conductivity. From such a viewpoint, an aluminum-based metal or a copper-based metal is used as the metal species constituting the metal cooling panel 20, and specifically, the metal cooling panel 20 is preferably formed of at least one selected from the group consisting of an aluminum member, an aluminum alloy member, a copper member, and a copper alloy member. The average thickness of the metal cooling panel 20 is, for example, 0.5 mm to 30 mm, and preferably 0.5 mm to 20 mm in comprehensive consideration of heat conductivity, strength, and lightweight property.

The fine uneven structure on the metal cooling panel 20 preferably has an interval period of 0.01 µm to 500 µm from the viewpoint of more firmly bonding the metal cooling panel 20 and the resin bonding member 30.

The interval period of the fine uneven structure is an average of distances from projecting portions to adjacent projecting portions, and can be obtained from a photograph taken by an electron microscope or a laser microscope.

Specifically, an electron microscope or a laser microscope takes a photograph of the surface of the metal cooling panel 20 on which the fine uneven structure is formed. From the photograph, 50 projecting portions are optionally selected, and each of distances from the projecting portions to adjacent projecting portions is measured. The sum of all the distances from the projecting portions to adjacent projecting portions is divided by 50, and the resulting value is defined as the interval period.

The interval period of the fine uneven structure is preferably 0.02 µm to 100 µm, more preferably 0.05 µm to 50 µm, even more preferably 0.05 µm to 20 µm, and particularly preferably 0.10 µm to 10 µm.

In a case where the interval period of the fine uneven structure is equal to or more than the lower limit, the resin bonding member 30 can be more deeply advanced into the recessed portions of the fine uneven structure, and the bonding strength between the metal cooling panel 20 and the resin bonding member 30 can be further improved. In addition, in a case where the interval period of the fine uneven structure is equal to or less than the upper limit, it is possible to further suppress the formation of a gap at the bonding portion between the metal cooling panel 20 and the resin bonding member 30. As a result, the leakage of the refrigerant from the bonding portion between the metal cooling panel 20 and the resin bonding member 30 can be suppressed.

In this embodiment, the size (depth, pore size, inter-pore distance, and the like) of the fine uneven structure formed on the surface of the metal cooling panel 20 is not particularly limited, and ten-point average roughness R_{zjis} measured according to JIS B 0601 is, for example, 1 µm or more, preferably 1 µm to 1 mm, and more preferably 3 µm to 100 µm.

The method of forming the fine uneven structure on the surface of the metal cooling panel 20 is not particularly limited, and examples thereof include a method of immersing the metal cooling panel 20 in an aqueous solution of an inorganic base such as sodium hydroxide and/or an aqueous solution of an inorganic acid such as hydrochloric acid or nitric acid; a method of treating the metal cooling panel 20 by an anodizing method; a method of forming a fine uneven structure on the surface of the metal cooling panel 20 by pressing a die punch having a fine uneven structure produced by mechanical cutting such as diamond abrasive grain grinding or blasting against the surface of the metal cooling panel 20; a method of forming a fine uneven structure on the surface of the metal cooling panel 20 by sand blasting, knurling, or laser processing; and a method of immersing the metal cooling panel 20 in an aqueous solution of one or more selected from hydrated hydrazine, ammonia, and a water-soluble amine compound as disclosed in International Publication No. WO2009/31632.

Especially in a case where the immersion method is employed among the above methods, the fine uneven structure is formed not only on the bonding surface of the metal cooling panel 20 with the resin bonding member 30, but also on the entire surface of the metal cooling panel 20. However, such an embodiment does not impair the effects of the present invention at all, but rather increases a heat exchange area with the refrigerant and can realize better cooling efficiency.

This application claims priority to Japanese Patent Application No. 2019-115281 filed on June 21, 2019, incorporated herein by reference in its entirety.

### REFERENCE SIGNS LIST

- 10:: resin flow path
- 10A:: space portion
- 10B:: refrigerant injection port
- 10C:: refrigerant recovery port
- 10D:: barrier
- 20:: metal cooling panel
- 30:: resin bonding member

## Claims

1. A cooling device comprising:
a resin flow path which is provided with a space portion serving as a flow path in at least one surface;
a metal cooling panel for cooling a heating element, which covers the space portion and of which at least a part is in contact with the resin flow path; and
a resin bonding member for bonding the resin flow path and the metal cooling panel,
wherein the metal cooling panel has a fine uneven structure at least on a surface of a bonding portion with the resin bonding member, and the metal cooling panel and the resin bonding member are bonded by allowing a part of the resin bonding member to enter into the fine uneven structure.

2. The cooling device according to Claim 1,
wherein a resin component constituting the resin flow path and a resin component constituting the resin bonding member are integrated at a bonding portion between the resin flow path and the resin bonding member.

3. The cooling device according to Claim 1 or 2,
wherein a resin component constituting the resin flow path and a resin component constituting the resin bonding member are fused at a bonding portion between the resin flow path and the resin bonding member.

4. The cooling device according to any one of Claims 1 to 3,
wherein both a resin component constituting the resin flow path and a resin component constituting the resin bonding member are thermoplastic resins or thermosetting resins.

5. The cooling device according to any one of Claims 1 to 4,
wherein the resin flow path and the metal cooling panel are in contact with each other at an outer periphery of the resin flow path.

6. The cooling device according to Claim 5,
wherein the resin flow path and the metal cooling panel are in contact with each other even inside the resin flow path.

7. The cooling device according to any one of Claims 1 to 6,
wherein the resin flow path has a bottom portion, a side wall portion erected on the bottom portion, and a plurality of threshold-like barriers for forming a cooling medium flow path on the bottom portion.

8. The cooling device according to any one of Claims 1 to 7,
wherein the metal cooling panel and the resin flow path are bonded by one or more selected from an adhesive method, a heat fusion method, and a mechanical fastening method.

9. The cooling device according to any one of Claims 1 to 8,
wherein an interval period of the fine uneven structure is in a range of 0.01 µm to 500 µm.

10. The cooling device according to any one of Claims 1 to 9,
wherein the metal cooling panel is formed of at least one selected from the group consisting of an aluminum member, an aluminum alloy member, a copper member, and a copper alloy member.

11. A structure comprising:
a heating element; and
the cooling device according to any one of Claims 1 to 10,
wherein the heating element is disposed on a surface of the metal cooling panel in the cooling device.
